(19) Europäisches Patentamt
European Patent Office
Office européen des brevets

(11) **EP 3 021 455 A1**

(12) **EUROPEAN PATENT APPLICATION**
published in accordance with Art. 153(4) EPC

(43) Date of publication:
**18.05.2016 Bulletin 2016/20**

(21) Application number: **14822952.9**

(22) Date of filing: **10.07.2014**

(51) Int Cl.:
*H02J 7/35* (2006.01)          *G05F 1/67* (2006.01)
*H02J 3/46* (2006.01)          *H02S 10/00* (2014.01)

(86) International application number:
**PCT/JP2014/068397**

(87) International publication number:
**WO 2015/005414 (15.01.2015 Gazette 2015/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.07.2013 JP 2013144652**

(71) Applicant: **Powerunited Inc.
Kobe-shi, Hyogo 651-0087 (JP)**

(72) Inventor: **YAMAGUCHI, Satarou
Kasugai-shi
Aichi 487-0017 (JP)**

(74) Representative: **Miller Sturt Kenyon
9 John Street
London WC1N 2ES (GB)**

(54) **POWER SUPPLY SYSTEM AND HEAT PUMP SYSTEM**

(57) The object of the present invention is to prevent an increase in cost even when solar power generation is utilized. A power supply system includes: a VVVF inverter 11 which converts DC power to AC power and outputs an AC voltage falling within a predetermined voltage value range; a solar power generation panel 14 which converts solar energy to DC power and which is capable of outputting a DC voltage equal to or greater than an upper limit voltage value of the voltage value range to the VVVF inverter 11; a AC-DC converter 15 which converts the AC power supplied from a power system S to DC power and outputs a DC voltage of a specific value that is equal to or greater than a lower limit voltage value of the voltage value range to the VVVF inverter 11 in order to compensate for a shortage of power supplied from the solar power generation panel 14 to the VVVF inverter 11; a first diode 12 which allows a current to flow in the direction from the solar power generation panel 14 to the VVVF inverter 11; and a second diode 13 which allows a current to flow in the direction from the AC-DC converter 15 to the VVVF inverter 11.

FIG. 1

# Description

## Technical Field

The present invention relates to a power supply system and a heat pump system.

## Background Art

The solar power generation utilizing sunlight, which is renewable energy, has been attracting significant attention mainly because it requires no fuel and emits no greenhouse gas during an operation. A solar power generation apparatus that uses solar power generation in conjunction with a power system is disclosed in Patent Document 1 given below. The solar power generation apparatus described in Patent Document 1 converts DC power output from a solar battery string into AC power by a power converter, and supplies the converted AC power to an AC load or a power system.

## Citation List

## Patent Document

Patent Document 1: JP2004-146791A

## Disclosure of the Invention

## Problem to be Solved by the Invention

When converting power by a power converter, the solar power generation apparatus described in Patent Document 1 synchronizes the voltage or the phase of the AC power after the conversion with the voltage or the phase of a power system. Such a power converter is required to have high conversion accuracy, contributing to higher cost.

The present invention has been made to solve the problem described above, and it is an object of the invention to provide a power supply system and a heat pump system that are capable of preventing an increase in cost even when solar power generation is utilized.

## Means for Solving the Problem

A power supply system, which is an embodiment of the present invention, includes: a DC-AC converter which converts DC power to AC power and outputs an AC voltage falling within a predetermined voltage value range; a solar power generation unit which converts solar energy to DC power and which is capable of outputting a DC voltage that is equal to or greater than an upper limit voltage value of the voltage value range to the DC-AC converter; an AC-DC converter which converts AC power supplied from a power system to DC power and outputs a DC voltage of a specific value, which is equal to or greater than a lower limit voltage value of the voltage value range, to the DC-AC converter in order to compensate for a shortage of power supplied from the solar power generation unit to the DC-AC converter; a first backflow prevention unit which allows a current to flow in the direction from the solar power generation unit to the DC-AC converter; and a second backflow prevention unit which allows a current to flow in the direction from the AC-DC converter to the DC-AC converter.

Adopting the arrangement described above makes it possible to supply an output voltage of the solar power generation unit to the DC-AC converter in the case where the voltage output from the solar power generation unit is equal to or greater than the voltage output from the AC-DC converter during, for example, daytime or the like. Meanwhile, in the case where the voltage output from the solar power generation unit is below the voltage output from the AC-DC converter during, for example, nighttime or the like, the output voltage of the AC-DC converter can be supplied to the DC-AC converter. In other words, it is possible to supply the power from the solar power generation unit in preference to the power from the power system and also to secure stable power supply by having the power from the power system compensate for unstable power from the solar power generation unit.

Further, the DC power of the solar power generation unit and the DC power of the AC-DC converter can be directly supplied as the DC power to the DC-AC converter through the backflow prevention units, thus obviating the need for a power converter that converts DC power to AC power and the need for synchronizing the phase of the power to be supplied to the DC-AC converter. This arrangement makes it possible to achieve a simpler configuration with resultant prevention of an increase in cost. Hence, the cost can be reduced even when the solar power generation is utilized.

The AC-DC converter may use the lower limit voltage value of the voltage value range as the specific value.

With this arrangement, if the voltage output from the solar power generation unit is equal to or greater than the lower limit value of the supply voltage output from the DC-AC converter, then the output voltage of the solar power generation unit can be supplied to the DC-AC converter, and if the voltage output from the solar power generation unit is below the lower limit value of the supply voltage output from the DC-AC converter, then the output voltage of the AC-DC converter can be supplied to the DC-AC converter.

A heat pump system, which is an embodiment of the present invention, includes: a heat pump which has a compressor driven by AC power supplied from the power supply system; a hot water storage vessel that stores hot water heated by hot heat of the heat pump; and a cold water storage vessel that stores cold water cooled by cold heat of the heat pump.

Adopting the configuration described above makes it possible to drive the compressor of the heat pump by the power supplied from the power supply system, and also to utilize the hot heat and the cold heat of the heat pump system so as to store the hot water and the cold water as energy sources in the hot water storage vessel and the cold water storage vessel when the power supplied from the power supply system exceeds the power consumed by the compressor.

Effect of the Invention

According to the present invention, an increase in cost can be prevented even when solar power generation is utilized.

Brief Description of the Drawings

[FIG. 1] It is a diagram illustrating the configuration of a power supply system according to an embodiment.
[FIG. 2] It is a diagram illustrating the characteristics of a solar power generation panel.
[FIG. 3] It is a diagram illustrating the configuration of a heat pump system according to an embodiment.
[FIG. 4] It is a diagram illustrating an internal configuration of a hot water storage vessel.
[FIG. 5] It is a diagram illustrating the configuration of a heat pump system in a modified example.
[FIG. 6] It is a diagram illustrating the configuration of a power supply system in a modified example.
[FIG. 7] It is a diagram illustrating the configuration of a power supply system in a modified example.
[FIG. 8] It is a diagram illustrating the configuration of a heat pump system in a modified example.

Mode for Carrying out the Invention

The following will describe preferred embodiments of a power supply system and a heat pump system in accordance with the present invention with reference to the accompanying drawings.

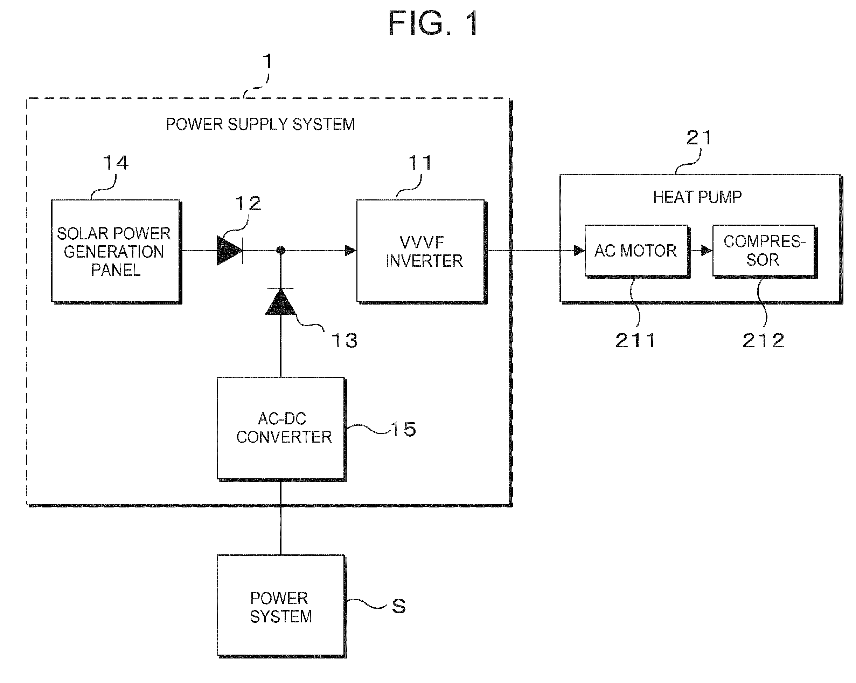

First, the configuration of the power supply system in an embodiment will be described with reference to FIG. 1. A power supply system 1 is constituted by exemplarily including VVVF (Variable Voltage Variable Frequency) inverter 11, a first diode 12, a second diode 13, a solar power generation panel 14, and an AC-DC converter 15.

The VVVF inverter 11 is a power converter that converts DC power to AC power (DC-AC converter). The VVVF inverter 11 outputs an AC voltage that falls within the range of a supply voltage value specified by, for example, the Electricity Business Act. Exemplarily, the Electricity Business Act stipulates that the supply voltage be maintained within the range of 101 V±6V if the standard voltage to be supplied is 100V, or that the supply voltage be maintained within the range of 202V±20V if the standard voltage to be supplied is 200V.

The VVVF inverter 11 supplies an AC voltage to an AC motor 211 included in a heat pump 21, which will be discussed later. The AC motor 211 is an AC electric motor that drives a compressor 212 included in the heat pump 21.

In the present embodiment, a description will be given of a VVVF inverter as the inverter constituting the power supply system. However, the inverter constituting the power supply system is not limited to the VVVF inverter and may alternatively be a regular inverter that does not use the VVVF method. Adopting the VVVF inverter is advantageous in that voltage and frequency can be randomly changed. Meanwhile, adopting a regular inverter is advantageous in that voltage and frequency will be constant, so that the loss in the inverter will be reduced, resulting in higher efficiency of the motor.

The first diode 12 and the second diode 13 are semiconductor diodes (backflow prevention units) that allow a current to flow in one direction from an anode to a cathode and prohibit a current from flowing in the direction opposite thereto. The first diode 12 is disposed between the solar power generation panel 14 and the VVVF inverter 11. The first diode 12 has its anode connected to the solar power generation panel 14 and its cathode connected to the VVVF inverter 11 such that a current flows in the direction from the solar power generation panel 14 to the VVVF inverter 11.

The second diode 13 is disposed between the AC-DC converter 15 and the VVVF inverter 11. The second diode 13 has its anode connected to the AC-DC converter 15 and its cathode connected to the VVVF inverter 11 such that a current flows in the direction from the AC-DC converter 15 to the VVVF inverter 11.

Disposing the first diode 12 and the second diode 13 as described above permits the formation of an OR circuit composed of the first diode 12 and the second diode 13. Thus, either the output voltage of the solar power generation panel 14 or the output voltage of the AC-DC converter 15, whichever is on a higher potential side, will be supplied to the VVVF inverter 11. The first diode 12 and the second diode 13 are not limited to the semiconductor diodes and may alternatively be other elements or the like capable of functioning as the backflow prevention units.

The solar power generation panel 14 is a module (solar power generation unit) that converts solar energy to DC power. The solar power generation panel 14 has a maximum power point tracking unit. The maximum power point tracking unit is a circuit that controls an output voltage or an output current such that the output power of the solar power generation panel 14 operates in the vicinity of a maximum power point. The maximum power point refers to a point at which the output power reaches a maximum in the power-voltage characteristics of the solar power generation panel 14.

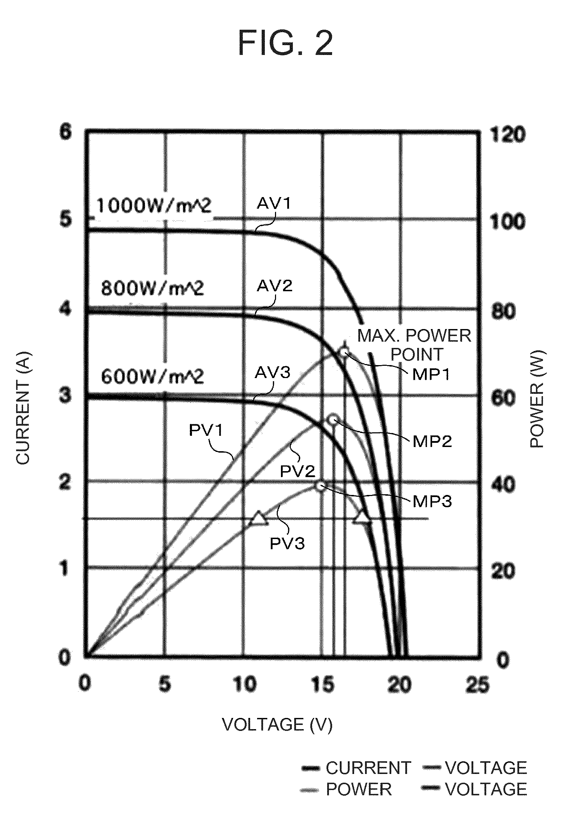

FIG. 2 is a diagram illustrating the characteristics of the solar power generation panel. In FIG. 2, AV1, AV2 and AV3 denote the current-voltage characteristic, PV1, PV2 and PV3 denote the power-voltage characteristic, and MP1, MP2 and MP3 denote the maximum power points. AV1, PV1 and MP1 denote the current-voltage characteristic, the power-voltage characteristic and the maximum power point, respectively, when the quantity of light irradiated to the panel is 1000W/m$^2$, AV2, PV2 and MP2 denote the current-voltage characteristic, the power-voltage characteristic and the maximum power point, respectively, when the quantity of light irradiated to the panel is 800W/m$^2$, and AV3, PV3 and MP3 denote the current-voltage characteristic, the power-voltage characteristic and the maximum power point, respectively, when the quantity of light irradiated to the panel is 600W/m$^2$.

As illustrated in FIG. 2, the power-voltage characteristics PV1 to PV3, the current-voltage characteristics AV1 to AV3, and the maximum power points MP1 to MP3 of the solar power generation panel 14 change with the quantity of light irradiated to the panel. In other words, the characteristics and the maximum power points change with, for example, a weather condition or a time zone. The maximum power point tracking unit controls the output voltage or the output current on the basis of the characteristics according to the quantity of light at a particular point of time such that the output power operates in the vicinity of the maximum power point, thus maximizing the output power based on the quantity of light at the particular point of time. This enables the solar power generation panel 14 to output the maximum power according to a weather condition or the like even when the weather condition or the like changes. Further, as illustrated in FIG. 2, the voltages at the maximum power points MP1 to MP3 fall within a voltage range that can be regarded as substantially constant, so that the provision of the maximum power point tracking unit permits the stable supply of the output voltage.

The maximum value of the voltage that can be output from the solar power generation panel 14 illustrated in FIG. 1 is set at equal to or greater than the upper limit value of the supply voltage output from the VVVF inverter 11. Thus, when at least the maximum output voltage is being supplied from the solar power generation panel 14, the output voltage from the solar power generation panel 14 alone can cover all the supply voltage to be output to the heat pump 21 from the VVVF inverter 11.

The AC-DC converter 15 is a power converter that converts the AC power supplied from a power system S to DC power (AC-DC converter). The power system S is a generic term for the entire system for supplying electric power to consumers from an electric company or the like, and includes facilities, for example, a power plant, substations, power lines, and distribution lines. The output voltage value of the AC-DC converter 15 is set at a specific value that is equal to or greater than the lower limit value of the voltage output from the VVVF inverter 11 so as to make it possible to compensate for a shortage of power supplied to the VVVF inverter 11 from the solar power generation panel 14. With this arrangement, the voltage output to the heat pump 21 from the VVVF inverter 11 can be covered by the output voltage from the AC-DC converter 15 alone even if the output voltage from the solar power generation panel 14 is below the lower limit value of the voltage output from the VVVF inverter 11.

Configuring the power supply system 1 as described above allows the output voltage of the solar power generation panel 14 to be supplied to the VVVF inverter 11 if the voltage output from the solar power generation panel 14 becomes equal to or greater than the voltage output from the AC-DC converter 15 as in, for example, daytime or the like. Meanwhile, if the voltage output from the solar power generation panel 14 is below the voltage output from the AC-DC converter 15 as in, for example, nighttime or the like, then the output voltage of the AC-DC converter 15 can be supplied to the VVVF inverter 11.

In other words, the power from the solar power generation side can be supplied in preference to the power from the power system side, and the unstable power from the solar power generation panel 14 can be compensated for by the power from the power system S, thus allowing stable power supply to be achieved.

Further, the DC power of the solar power generation panel 14 and the DC power of the AC-DC converter 15 can be supplied as the DC power to the VVVF inverter 11 through the diodes, thus obviating the need for a power converter that converts DC power to AC power and the need for synchronizing the phase of the power supplied to the VVVF inverter 11. This makes it possible to simplify the configuration, leading to a reduction in cost. Hence, an increase in cost can be prevented even when the solar power generation is utilized.

Further, the second diode 13 makes it possible to prevent the power from the solar power generation panel 14 from going to the power system S, so that the stability of the power system S can be maintained. Further, the diodes have relatively low power loss, enabling the power supply system 1, which supplies power through the first diode 12 or the second diode 13, to enhance the power supply efficiency.

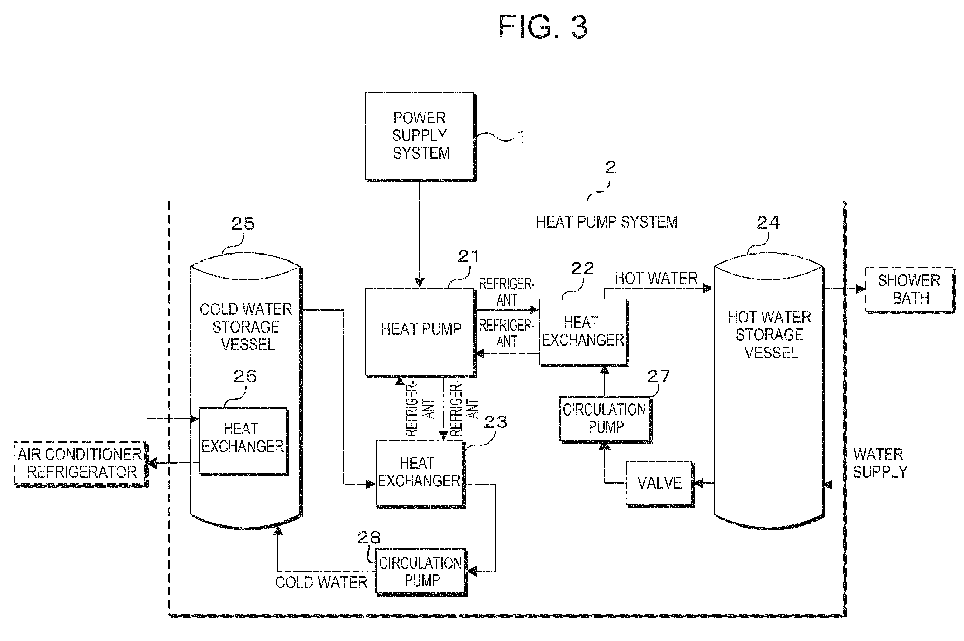

Referring now to FIG. 3, the configuration of a heat pump system according to an embodiment will be described. A heat pump system 2 is exemplarily constituted by including the heat pump 21, heat exchangers 22, 23 and 26, a hot water storage vessel 24, a cold water storage vessel 25, and circulation pumps 27 and 28.

The heat pump system 2 has a hot heat utilization mechanism that stores hot water, which has been heated utilizing the hot heat of the heat pump 21, in the hot water storage vessel 24, and a cold heat utilization mechanism that stores cold water, which has been cooled utilizing the cold heat of the heat pump 21, in the cold water storage vessel 25. The hot water stored in the hot water storage vessel 24 can be used, for example, for showers, baths or kitchens or the like. The cold water stored in the cold water storage vessel 25 can be used, for example, for an air conditioner, a refrigerator or like through the heat exchanger 26.

The hot heat utilization mechanism of the heat pump system 2 will be described. The heat pump 21 compresses a refrigerant, which circulates in the heat pump, by the compressor and sends the refrigerant that has become hot to the heat exchanger 22. The water supplied to the hot water storage vessel 24 is sent into the heat exchanger 22 by driving the circulation pump 27. The hot water, which has been heated by the heat exchange with the refrigerant in the heat exchanger 22, is sent to and stored in the hot water storage vessel 24 by driving the circulation pump 27.

The cold heat utilization mechanism of the heat pump system 2 will be described. The heat pump 21 expands the refrigerant, which circulates in the heat pump, by an expansion valve and sends the refrigerant, which has become cold, to the heat exchanger 23. The cold water stored in the cold water storage vessel 25 is sent to the heat exchanger 23 by driving the circulation pump 28. The cold water, which has been cooled by the heat exchange with the refrigerant in the heat exchanger 23, is sent to and stored in the cold water storage vessel 25 by driving the circulation pump 28.

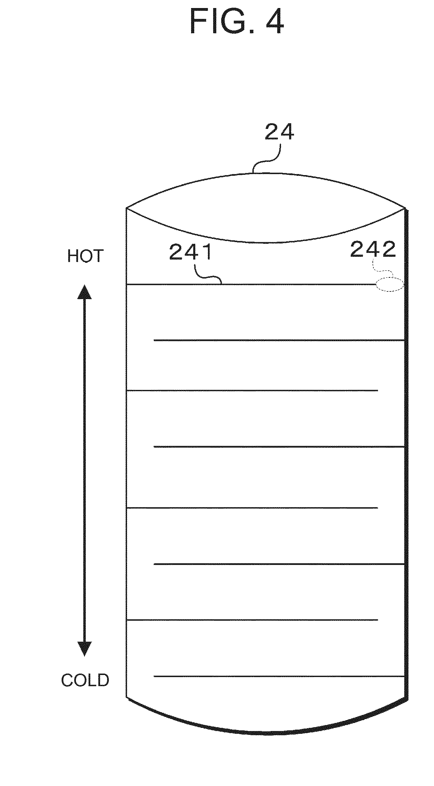

As illustrated in FIG. 4, a plurality of partition plates 241 is provided in layers in the hot water storage vessel 24. A gap 242 is formed between each of the partition plates 241 and the inner wall of the vessel, and the hot water stored in the hot water storage vessel 24 flows in the vessel through the gaps 242. If the partition plates 241 were not provided, then the hot water stored in the hot water storage vessel 24 would be allowed to convectively flow in the entire vessel, inconveniently causing the hot water having a relatively high temperature on the upper side to mix with the hot water having a relatively low temperature on the lower side, with resultant deteriorated thermal storage efficiency. In contrast thereto, the provision of the partition plates 241 makes it possible to suppress the convection in the entire vessel, thus permitting higher thermal storage efficiency.

According to the heat pump system 2 in the present embodiment, the compressor 212 of the heat pump 21 can be driven by the power supplied from the power supply system 1, and if the power supplied from the power supply system 1 exceeds the power consumed by the compressor 212, then the hot water and the cold water can be stored as energy sources by utilizing the hot heat and the cold heat of the heat pump system 2. The hot water stored as the energy source can be utilized, for example, for showers, baths or kitchens or the like, and the cold water stored as the energy source can be utilized, for example, for an air conditioner, a refrigerator or the like.

[Modified Examples]

The embodiments described above are merely examples, and a variety of modifications and the application of techniques not explicitly described in the embodiments are not to be excluded. In other words, the present invention can be implemented in various forms within a range that does not depart from the scope thereof.

For example, in the foregoing embodiments, the output voltage value of the AC-DC converter 15 is set to the specific value equal to or greater than the lower limit value of the voltage output from the VVVF inverter 11. Alternatively, however, the output voltage value of the AC-DC converter 15 may be set to the lower limit value of the voltage output from the VVVF inverter 11.

This makes it possible to supply the output voltage of the solar power generation panel 14 to the VVVF inverter 11 when the voltage output from the solar power generation panel 14 is equal to or greater than the lower limit value of the supply voltage output from the VVVF inverter 11, and to supply the output voltage of the AC-DC converter 15 to the VVVF inverter 11 when the voltage output from the solar power generation panel 14 is below the lower limit value of the supply voltage output from the VVVF inverter 11.

Further, in the foregoing embodiments, the solar power generation panel 14 is provided with the maximum power point tracking unit. However, providing the solar power generation panel 14 with the maximum power point tracking unit is not essential. For example, the AC-DC converter 15 may be provided with a voltage controller rather than providing the solar power generation panel 14 with the maximum power point tracking unit. The voltage controller controls the DC voltage output from the AC-DC converter 15 to the VVVF inverter 11 such that the DC power output from the solar power generation panel 14 will be maximized. Providing such a voltage controller to control the voltage of the AC power supplied from the power system S permits maximized utilization of the DC power output from the solar power generation panel 14.

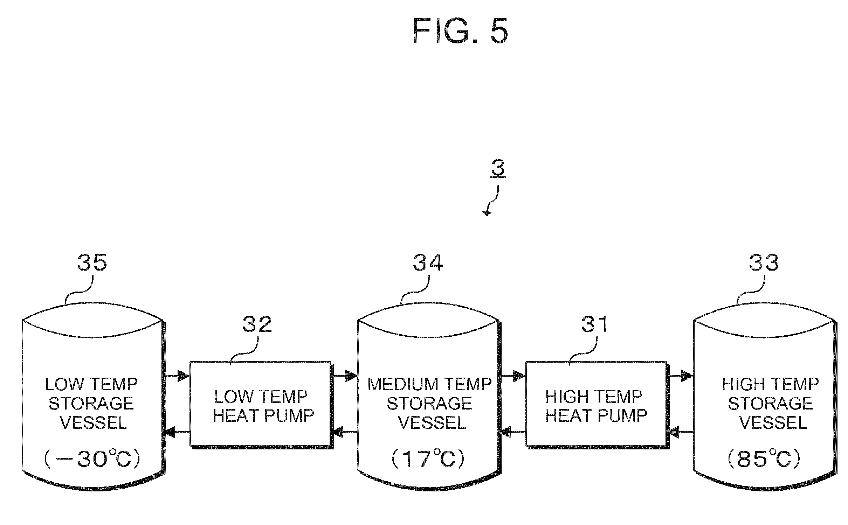

Further, in the foregoing embodiments, the description has been given of the case where the heat pump system 2 utilizes the single heat pump 21 to store the hot water in the hot water storage vessel 24 and to store the cold water in the cold water storage vessel 25; however, the configuration of the heat pump system is not limited thereto. For example, as illustrated in FIG. 5, the heat pump system may alternatively be a heat pump system 3 that utilizes two heat pumps 31 and 32 and stores waters having different temperatures in three storage vessels 33, 34 and 35.

The heat pump system 3 in the modified example is adapted to store the water, which has been heated utilizing the hot heat of the heat pump 31 on a high temperature side, in the high temperature storage vessel 33, store the water, which has been cooled utilizing the cold heat of the heat pump 31 on the high temperature side, in a medium temperature storage vessel 34, store the water, which has been heated utilizing the hot heat of the heat pump 32 on a low temperature side, in the medium temperature storage vessel 34, and store the water, which has been cooled utilizing the cold heat of the heat pump 32 on the low temperature side, in the low temperature storage vessel 35.

Utilizing the heat pump in two stages allows higher efficiency of the heat pump system to be achieved, as compared with the case where the heat pump is utilized in one stage. In the following, the efficiency of the heat pump system in each case will be determined and compared. The efficiency of the heat pump system can be expressed using, for example, the total efficiency (hereinafter referred to as "the COP (Coefficient Of Performance)") of the heat pump.

The COP is calculated using expression (1) given below. In expression (1), εc denotes the Carnot efficiency, and εm denotes a mechanical efficiency.

$$\text{COP} = \varepsilon c \times \varepsilon m \quad \ldots \quad (1)$$

The Carnot efficiency εc is calculated using expression (2) given below. In expression (2), Tc denotes a temperature [K] on the low temperature side, and Th denotes the temperature [K] on the high temperature side.

$$\varepsilon c = Tc / (Th - Tc) \quad \ldots \quad (2)$$

The efficiency of the heat pump system 2 (refer to FIG. 3), which utilizes the heat pump 21 in one stage will be as follows.

First, the COP in the heat pump system 2 is determined in the case where the temperature of the hot water stored in the hot water storage vessel 24 is 85 [°C], the temperature of the cold water stored in the cold water storage vessel 25 is 5 [°C], and the mechanical efficiency εm in the temperature range is 0.9. In this case, the Carnot efficiency will be 3.48 according to expression (2), and the COP determined by substituting 3.48 in expression (1) will be 3.13.

In the heat pump system 2, the COP of which is 3.13, if the power consumed by the heat pump 21 is 200 [W], then heat of 626 [W] will be removed from the cold water storage vessel 25, whereas heat of 826 [W], which is obtained by adding 200 [W] of the consumed power to 626 [W], will be taken into the hot water storage vessel 24.

In other words, if the hot water of 85 [°C] is stored in the hot water storage vessel 24 and the cold water of 5 [°C] is stored in the cold water storage vessel 25, then the heat of 626 [W] can be removed from the cold water storage vessel 25 with respect to the consumed power of 200 [W].

Next, the COP in the heat pump system 2 is determined in the case where the temperature of the hot water stored in the hot water storage vessel 24 is 85 [°C], the temperature of the cold water stored in the cold water storage vessel 25 is -30 [°C], and the mechanical efficiency εm in the temperature range is 0.9. In this case, the Carnot efficiency is 2.11 according to expression (2), and the COP determined by substituting 2.11 in expression (1) will be 1.90.

In the heat pump system 2, which has the COP of 1.90, if the power consumed by the heat pump 21 is 200 [W], then heat of 380 [W] will be removed from the cold water storage vessel 25, whereas heat of 580 [W], which is obtained by adding 200 [W] of the consumed power to 380 [W], will be taken into the hot water storage vessel 24.

In other words, if the hot water of 85 [°C] is stored in the hot water storage vessel 24 and the cold water of -30 [°C] is stored in the cold water storage vessel 25, then the heat of 380 [W] can be removed from the cold water storage vessel 25 with respect to the consumed power of 200 [W].

These two examples differ in the temperature difference between the high temperature side and the low temperature side, namely, 80 [°C] and 115 [°C]. The comparison between the two in the COP indicates that the increase in the temperature difference by 35 [°C] results in a decrease in the COP by approximately 40%. This means that the efficiency is too low to be practical in the case where the hot water of 85 [°C] is stored and the cold water of -30 [°C] is stored. Expanding the temperature range to be applied tends to cause the medium used in the heat pump to increase the mechanical loss, so that the decreasing rate of the COP is expected to be actually larger than the foregoing value.

In contrast to the above, the efficiency of the heat pump system 3, which utilizes the heat pump in two stages (refer to FIG. 5), will be as follows.

First, the COP of the heat pump 31 on the high temperature side is determined. In the case where the temperature of the hot water stored in the high temperature storage vessel 33 is 85 [°C], the temperature of the water stored in the medium temperature storage vessel 34 is 17 [°C], and the mechanical efficiency εm in the temperature range is 0.9, the Carnot efficiency will be 4.26 according to expression (2), and the COP determined by substituting 4.26 in expression (1) will be 3.83.

In the heat pump 32, the COP of which is 3.83, if the power consumed by the heat pump 31 is 100 [W], then heat of 383 [W] will be removed from the medium temperature storage vessel 34, whereas heat of 483 [W], which is obtained by adding 100 [W] of the consumed power to 383 [W], will be taken into the high temperature storage vessel 33.

Next, the COP of the heat pump 32 on the low temperature side is determined. In the case where the temperature of the water stored in the medium temperature storage vessel 34 is 17 [°C], the temperature of the cold water stored in the low temperature storage vessel 35 is -30 [°C], and the mechanical efficiency εm in the temperature range is 0.9, the Carnot efficiency is 5.17 according to expression (2), and the COP determined by substituting 5.17 in expression (1) will be 4.65.

In the heat pump 32, the COP of which is 4.65, if the power consumed by the heat pump 32 is 100 [W], then heat of 465 [W] will be removed from the low temperature storage vessel 35, whereas heat of 565 [W], which is obtained by adding 100 [W] of the consumed power to 465 [W], will be taken into the medium temperature storage vessel 34.

In other words, if the water of 85 [°C] is stored in the high temperature storage vessel 33, the water of 17 [°C] is stored in the medium temperature storage vessel 34, and the water of -30 [°C] is stored in the low temperature storage vessel 35, then the heat of 465 [W] can be removed from the low temperature storage vessel 35, the consumed power of a total of 200 [W] being required for the two heat pumps 31 and 32.

These results indicate that, under the same condition of storing the water of 85 [°C] and the water of -30 [°C], the heat pump system 3 utilizing the heat pump in two stages is capable of removing the heat of 465 [W] from the low temperature storage vessel 35 for the consumed power of 200 [W], whereas the heat pump system 2 utilizing the heat pump 21 in one stage removes the heat of 380 [W] from the cold water storage vessel 25 for the consumed power of 200 [W]. In other words, the heat pump system 3 utilizing the heat pump in two stages is capable of achieving improved efficiency of the heat pump system that is approximately 22% higher than the efficiency of the heat pump system 2 utilizing the heat pump 21 in one stage.

In the foregoing modified example, the description has been given of the heat pump system 3 that utilizes the two heat pumps 31 and 32 to store the waters having different temperatures in the three storage vessels 33, 34 and 35. However, the present invention can be applied in the same manner also to a case where three or more heat pumps are utilized to store waters having different temperatures in four or more storage vessels. In this case, the heat pump system may be configured such that the heat pumps are disposed one each between adjacent storage vessels arranged in the order of the temperatures of the waters to be stored.

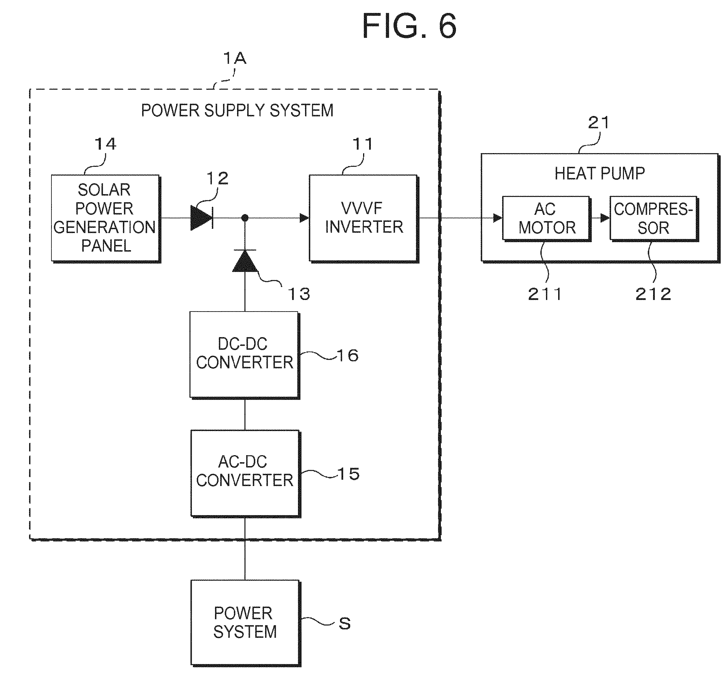

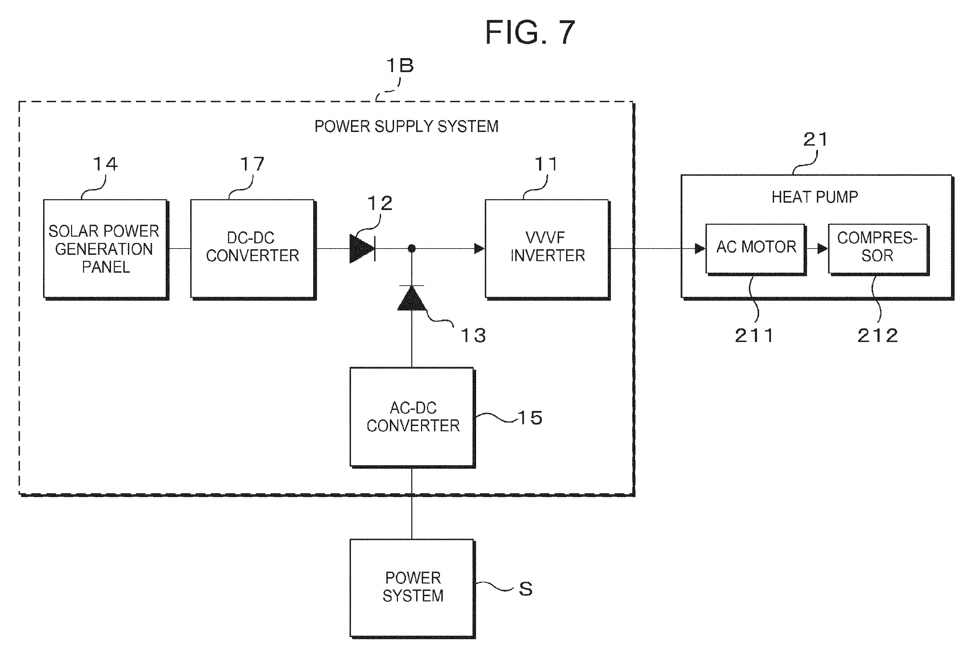

Further, in the power supply system 1 in the foregoing embodiment, a DC-DC converter may be further added. Referring to FIG. 6 and FIG. 7, two power supply systems in modified examples will be described. The constituent elements other than the DC-DC converters illustrated in FIG. 6 and FIG. 7 are the same as the constituent elements illustrated in FIG. 1, so that the description thereof will be omitted.

FIG. 6 is a diagram illustrating a power supply system 1 A in which a DC-DC converter 16 has been added between an AC-DC converter 15 and a second diode 13. The DC-DC converter 16 is a power converter (DC-DC converter) that adjusts a DC voltage (increases or decreases the voltage) input from the AC-DC converter 15 and outputs the adjusted voltage to a VVVF inverter 11. Disposing the DC-DC converter 16 as described above permits minimized susceptibility to the influence of, for example, a surge voltage generated by lightning or the like, thus making it possible to further stabilize the power supply from a power system side to the VVVF inverter 11.

FIG. 7 is a diagram illustrating a power supply system 1 B in which a DC-DC converter 17 has been added between a solar power generation panel 14 and a first diode 12. The DC-DC converter 17 is a power converter (DC-DC converter) that adjusts a DC voltage (increases or decreases the voltage) input from the solar power generation panel 14 and outputs the adjusted voltage to a VVVF inverter 11. Disposing the DC-DC converter 17 as described above makes it possible to carry out the same control as the foregoing maximum power point tracking control by controlling the output voltage of the DC-DC converter 17. In this case, therefore, the maximum power point tracking unit of the solar power generation panel 14 can be omitted.

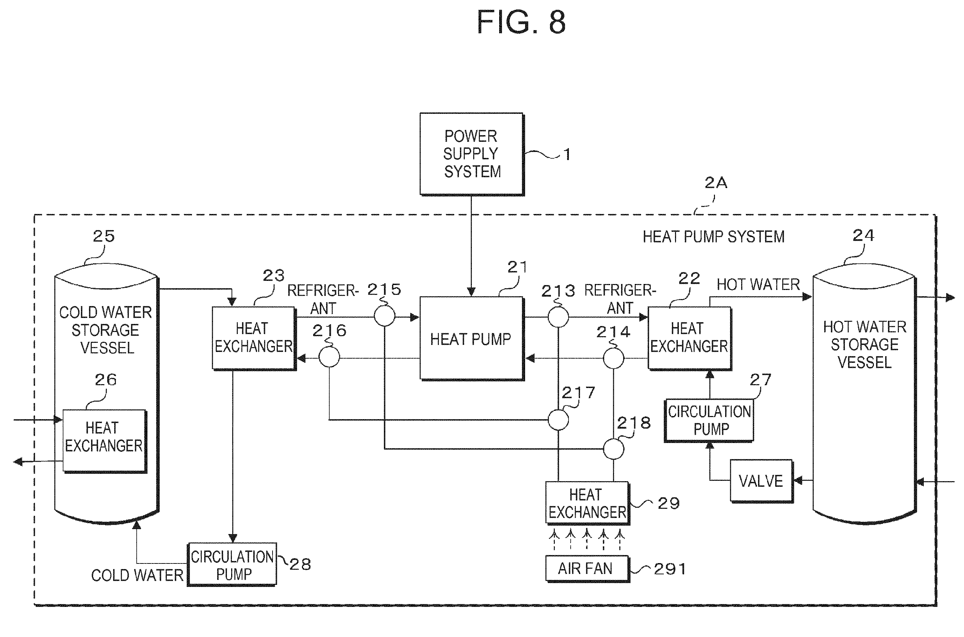

Further, the heat pump system 2 in the foregoing embodiment (FIG. 3) may alternatively be configured as illustrated in FIG. 8. In a heat pump system 2A illustrated in FIG. 8, six three-way valves 213 to 218, a heat exchanger 29, and an air fan 291 have been added to the constituent elements of the heat pump system 2 illustrated in FIG. 3. The constituent elements other than the added constituent elements illustrated in FIG. 8 are the same as the constituent elements illustrated in FIG. 3, so that the description thereof will be omitted.

The three-way valves 213 and 214 are provided in the refrigerant passages between a heat pump 21 and a heat exchanger 22. The three-way valves 215 and 216 are provided in the refrigerant passages between the heat pump 21 and a heat exchanger 23. The three-way valve 217 is provided in the refrigerant passage between the three-way valves 213 and 216 and a heat exchanger 29. The three-way valve 218 is provided in a refrigerant passage between the three-way valves 214 and 215 and the heat exchanger 29. The opening and closing of the three-way valves 213 to 218 are controlled by the heat pump 21.

The heat exchanger 29 subjects a high temperature refrigerant or a low temperature refrigerant received from the refrigerant passages to the heat exchange with the atmosphere (air) sent from the air fan 291.

The ratio of the amount of heat supplied to a hot water storage vessel 24 and a cold water storage vessel 25 is determined according to the energy conservation law. However, the demand generally varies, so that the demand for the hot water and the cold water varies accordingly. If the demand varies, whichever side that has a lower demand produces a surplus.

The heat pump system 2A illustrated in FIG. 8 is configured such that the amount of heat from the side that has the surplus due to a lower demand is led to the side having a higher demand by controlling the three-way valves 213 to 218. This configuration permits higher efficiency of the heat pump system. Further, when leading the amount of heat to the side having a higher demand, the refrigerant can be subjected to the heat exchange with the atmosphere by leading the refrigerant to the heat exchanger 29, thus making it possible to enhance the COP, as compared with the case where the heat exchanger 29 is not utilized.

Industrial Applicability

The power supply system and the heat pump system in accordance with the present invention are suited for preventing an increase in cost even when solar power generation is utilized.

Description of Reference Numerals

| | |
|---|---|
| 1 ... | power supply system |
| 2 ... | heat pump system |
| 11 ... | vvvf inverter |
| 12 ... | first diode |
| 13 ... | second diode |
| 14 ... | solar power generation panel |
| 15 ... | ac-dc converter |
| 16, 17 ... | dc-dc converter |
| 21 ... | heat pump |
| 22 ... | heat exchanger |
| 23 ... | heat exchanger |
| 24 ... | hot water storage vessel |
| 25 ... | cold water storage vessel |
| 26 ... | heat exchanger |
| 27 ... | circulation pump |
| 28 ... | circulation pump |
| 29 ... | heat exchanger |
| 211 ... | ac motor |
| 212 ... | compressor |
| 213 ~ 218 ... | three-way valve |
| 241 ... | partition plate |
| 242 ... | gap |
| 291 ... | air fan |

Claims

1. A power supply system comprising:

a DC-AC converter which converts DC power to AC power and outputs an AC voltage falling within a predetermined voltage value range; a solar power generation unit which converts solar energy to DC power and which is capable of outputting a DC voltage that is equal to or greater than an upper limit voltage value of the voltage value range to the DC-AC converter;

an AC-DC converter which converts AC power supplied from a power system to DC power and outputs a DC voltage of a specific value, which is equal to or greater than a lower limit voltage value of the voltage value range, to the DC-AC converter in order to compensate for a shortage of power supplied from the solar power generation unit to the DC-AC converter; a first backflow prevention unit which allows a current to flow in the direction from the solar power generation unit to the DC-AC converter; and a second backflow prevention unit which allows a current to flow in the direction from the AC-DC converter to the DC-AC converter.

2. The power supply system according to claim 1, wherein the AC-DC converter has the lower limit voltage value of the voltage value range set to the specific value.

3. The power supply system according to claim 1 or 2, wherein the solar power generation unit has a maximum power point control unit which controls the DC power to be output to the DC-AC converter such that the DC power is maximized.

4. The power supply system according to claim 1 or 2, wherein the AC-DC converter has a voltage control unit which controls the DC voltage to be output to the DC-AC converter such that the DC power output from the solar power generation unit is maximized.

5. The power supply system according to claim 1 or 2, further comprising a DC-DC converter which adjusts and outputs a DC voltage and which is provided between the AC-DC converter and the second backflow prevention unit and/or between the solar power generation unit and the first backflow prevention unit.

6. A heat pump system comprising:

a heat pump which has a compressor driven by AC power supplied from the power supply system according to any one of claims 1 to 5; a hot water storage vessel which stores hot water heated by hot heat of the heat pump; and a cold water storage vessel which stores cold water cooled by cold heat of the heat pump.

7. A heat pump system comprising:

a plurality of heat pumps having a compressor driven by AC power supplied from the power supply system according to any one of claims 1 to 5; and a plurality of storage vessels storing waters, each of which has a different temperature, wherein the heat pumps are disposed one each between adjacent storage vessels arranged in the order of the temperatures of the waters to be stored.

FIG. 1

# FIG. 2

# FIG. 3

# FIG. 4

# FIG. 5

EP 3 021 455 A1

<u>3</u>

| 35 | 32 | 34 | 31 | 33 |
|---|---|---|---|---|
| LOW TEMP STORAGE VESSEL (−30℃) | LOW TEMP HEAT PUMP | MEDIUM TEMP STORAGE VESSEL (17℃) | HIGH TEMP HEAT PUMP | HIGH TEMP STORAGE VESSEL (85℃) |

# FIG. 6

# FIG. 7

POWER SUPPLY SYSTEM

1B

14 SOLAR POWER GENERATION PANEL

17 DC-DC CONVERTER

12

13

11 VVVF INVERTER

15 AC-DC CONVERTER

S POWER SYSTEM

21 HEAT PUMP

211 AC MOTOR

212 COMPRES-SOR

EP 3 021 455 A1

# FIG. 8

EP 3 021 455 A1

## INTERNATIONAL SEARCH REPORT

| | International application No. |
|---|---|
| | PCT/JP2014/068397 |

A. CLASSIFICATION OF SUBJECT MATTER

*H02J7/35*(2006.01)i, *G05F1/67*(2006.01)i, *H02J3/46*(2006.01)i, *H02S10/00* (2014.01)i

According to International Patent Classification (IPC) or to both national classification and IPC

B. FIELDS SEARCHED

Minimum documentation searched (classification system followed by classification symbols)
H02J7/35, G05F1/67, H02J3/46, H02S10/00

Documentation searched other than minimum documentation to the extent that such documents are included in the fields searched

| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-197751 A (Hokoku Kogyo Co., Ltd.), 19 July 2001 (19.07.2001), paragraphs [0015] to [0017]; fig. 1 (Family: none) | 1-7 |
| Y | JP 09-046924 A (Omron Corp.), 14 February 1997 (14.02.1997), paragraphs [0009] to [0019]; fig. 1 to 3 (Family: none) | 1-7 |
| Y | JP 2008-283841 A (Yasuo OHASHI), 20 November 2008 (20.11.2008), paragraphs [0030] to [0038]; fig. 1 to 2 (Family: none) | 4,6-7 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 September, 2014 (18.09.14) | 30 September, 2014 (30.09.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/068397

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-180836 A  (Matsushita Electric Industrial Co., Ltd.), 07 July 2005 (07.07.2005), paragraphs [0036] to [0054]; fig. 1 (Family: none) | 6-7 |
| Y | JP 2010-043798 A  (The Tokyo Electric Power Co., Inc.), 25 February 2010 (25.02.2010), paragraphs [0026] to [0039]; fig. 1 (Family: none) | 7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004146791 A